# Europäisches Patentamt

## European Patent Office

## Office européen des brevets

(19)

(11) Veröffentlichungsnummer: **0 023 983**
**B1**

(12) **EUROPÄISCHE PATENTSCHRIFT**

(45) Veröffentlichungstag der Patentschrift:
**01.02.84**

(51) Int Cl.³: **B 23 F 9/12**

(21) Anmeldenummer: **80104123.7**

(22) Anmeldetag: **16.07.80**

(54) **Verfahren zum Herstellen von Zahnrädern mit gewälzten Zahnflanken.**

(30) Priorität: **10.08.79 CH 7346/79**

(43) Veröffentlichungstag der Anmeldung:
**18.02.81 Patentblatt 81/7**

(45) Bekanntmachung des Hinweises auf die Patenterteilung:
**01.02.84 Patentblatt 84/5**

(84) Benannte Vertragsstaaten:
**BE CH DE FR GB IT LI SE**

(56) Entgegenhaltungen:
**DE - A - 1 552 743**
**DE - A - 1 627 357**
**DE - A - 1 627 358**
**DE - B - 1 226 398**
**US - A - 3 964 369**

(73) Patentinhaber: **Werkzeugmaschinenfabrik Oerlikon-Bührle AG, Birchstrasse 155, CH-8050 Zürich (CH)**

(72) Erfinder: **Kotthaus, Erich, Schmittenackerstrasse 18, CH-8304 Wallisellen (CH)**

### Verfahren zum Herstellen von Zahnrädern
### mit gewälzten Zahnflanken

Die Erfindung betrifft ein Verfahren zum Herstellen von Zahnrädern mit gewälzten Zahnflanken durch Herausschneiden von Zahnlücken mit mindestens einem um eine Messerkopfachse eine Drehbewegung ausführenden, mit Messern versehenen Stirnmesserkopf, wobei zum Schruppen der Zahnlücken in einem ersten Schritt Stirnmesserkopf und Werkstück mindestens eine Einstechbewegung gegeneinander ausführen und zum Schlichten der Zahnlücken in einem zweiten Schritt zwischen Stirnmesserkopf und Werkstück mindestens eine Wälzbewegung ausgeführt wird.

Aus der DE-A-1 552 743 ist ein Abwälzverfahren zum Herstellen eines Kegel- oder Hyperboloidzahnrades mit längsgekrümmten Zähnen mittels eines umlaufenden Werkzeugs bekannt. Dieses Verfahren weist die Merkmale des Oberbegriffes unseres Patentanspruches 1 auf. Dabei werden die Zahnlücken nach einem Einzelteilverfahren aus einem Zahnradrohling herausgeschnitten. Beim Herstellen einer Zahnlücke wird in einem ersten Schritt zwischen Werkzeug und Werkstück eine Einstech-Vorschubbewegung herbeigeführt, während sich das Werkzeug, d. h. der Messerkopf am äußeren Ende der herzustellenden Zahnlücke befindet. In einem zweiten Schritt führen Werkzeug und Werkstück eine Abwälzdrehung in Vorwärtsrichtung aus, um die konkave Flanke der Zahnlücke bis zu deren innerem Ende zu bewirken. Anschließend führen Werkzeug und Werkstück die Abwälzdrehung rückwärts aus, um die konvexe Flanke von deren innerem zum äußeren Ende zu bewirken. Dann wird das Werkstück um eine Zahnteilung weitergedreht, und der erste und der zweite Schritt wird an der nächsten herzustellenden Zahnlücke ausgeführt.

Bei diesem Abwälzverfahren wird die Zahnlücke beim Einstechen nur an deren äußerem Ende weitgehend herausgeschnitten. An deren innerem Ende wird durch den Einstechvorgang kein oder fast kein Werkstoff aus der Zahnlücke herausgeholt. Dieser wird erst durch den Abwälzvorgang entfernt. Dabei wird vor allem die, die konkave Flanke erzeugende Messerschneide stärker belastet, da sie den größten Teil des Werkstoffes aus dem, dem inneren Ende der Zahnlücke benachbarten Abschnitt herausschneiden muß.

Weiter ist aus der US-A-3 583 278 ein Verfahren zur Herstellung von Kegelrädern bekannt, deren Zahnlücken sich in Zahnlängsrichtung verengen. Bei diesem Verfahren werden in einem ersten Schritt die Zahnlücken nur durch Einstechen geschruppt. Dabei beginnt das Einstechen im Bereiche einer Stirnfläche des Kegelrades, bzw. in einem Endbreich der herzustellenden Zahnlücke, wobei mit zunehmender Zahnlückentiefe auch die Länge der Zahnlücke zunimmt. Hat die Zahnlücke eine Tiefe erreicht, die noch wesentlich geringer ist als die gewünschte Endtiefe der fertig geschruppten Zahnlücke, so wird ein Wälzvorgang eingeleitet. Dabei wird die Zahnlücke auch in Längsrichtung weiter geschnitten, so daß sie sich nun bis zur anderen Stirnfläche des Kegelrades erstreckt. Damit ist eine Zahnlücke herausgeschnitten, deren Tiefe zu vergrößern und deren Flankenform noch weiter zu verbessern ist.

Dies geschieht in einem weiteren Schritt, indem die Zahnlücke am Zahngrund, sowie an den Zahnflanken weiter bearbeitet wird, so daß nach diesem zweiten Schritt die Zahnlücken eine Form aufweisen, die derjenigen von fertig bearbeiteten Zahnlücken näher kommt.

Bei der Herstellung von geschruppten Zahnlücken gemäß obengenanntem Verfahren werden verschiedene Messerköpfe verwendet. Zum Schneiden der Zahnlücken auf eine erste, begrenzte Tiefe sind breite Messer vorgesehen, mit denen entsprechend nicht auf volle Zahnlückentiefe geschnitten werden kann. Beim anschließenden weiteren Schruppen auf größere Zahnlückentiefe müssen dann wieder schmalere, weniger leistungsfähige Messer eingesetzt werden.

Dieses Verfahren weist aber nur scheinbar eine gewisse Ähnlichkeit mit dem Verfahren gemäß Patentanspruch 1 auf, denn es handelt sich nur um einen Teil eines Verfahrens zum Schruppen von Zahnlücken. Das weitere Verfahren zum Fertigbearbeiten dieser Zahnlücken ist sehr umständlich und weist eine Anzahl Schritte auf, die auf verschiedenen Maschinen durchzuführen sind.

Die Erfindung wie sie in den Patentansprüchen gekennzeichnet ist, löst die Aufgabe, ein Verfahren zum Herstellen von Zahnrädern mit gewälzten Zahnflanken zu schaffen, bei welchem der größte Teil einer Zahnlücke unter gleichmäßiger Beanspruchung der die Innen- und die Außenflanken schneidenden Schneiden herausgeschnitten wird.

Die durch die Erfindung erreichten Vorteile sind darin zu sehen, daß die einzelnen Schneidkanten sich untereinander wesentlich gleichmäßiger abnützen, da die Innen- und die Außenschneidkanten gleich von Anfang an gleich stark belastet werden, was bedeutet, daß die Maschine nun in größeren Zeitabständen zum Auswechseln aller Messer oder Schleifen aller Schneiden abgestellt werden muß, bzw. die Standzeit der Messer erhöht wird, und daß die Bearbeitungszeit verkürzt wird. So wird die Produktionsleistung beim Herstellen von Zahnrädern mit gewälzten Zahnflanken erhöht.

Im folgenden wird die Erfindung anhand von ein Ausführungsbeispiel darstellenden Zeichnungen erläutert. Es zeigt

Fig. 1 schematisch einen Teil einer Verzahnungsmaschine,

Fig. 2 eine geometrische Darstellung der Verhältnisse beim Herstellen eines Kegelrades,

Fig. 3 und 4 schematisch eine Ansicht eines Kegelrades mit einer Zahnlücke,

Fig. 5 schematisch einen Ausschnitt aus einem Kegelrad mit einer Zahnlücke.

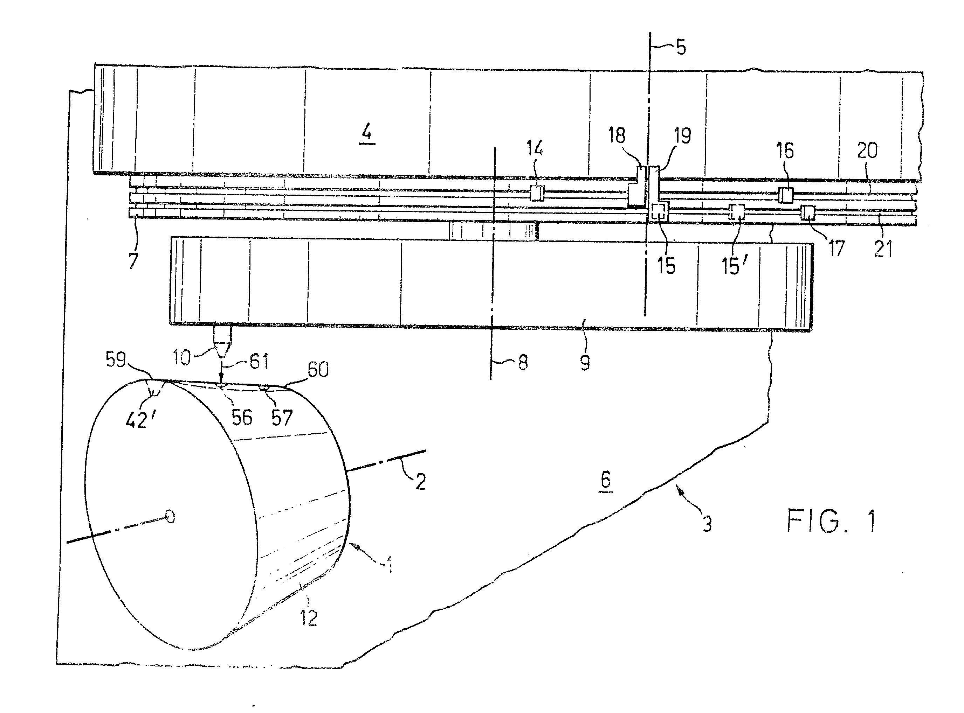

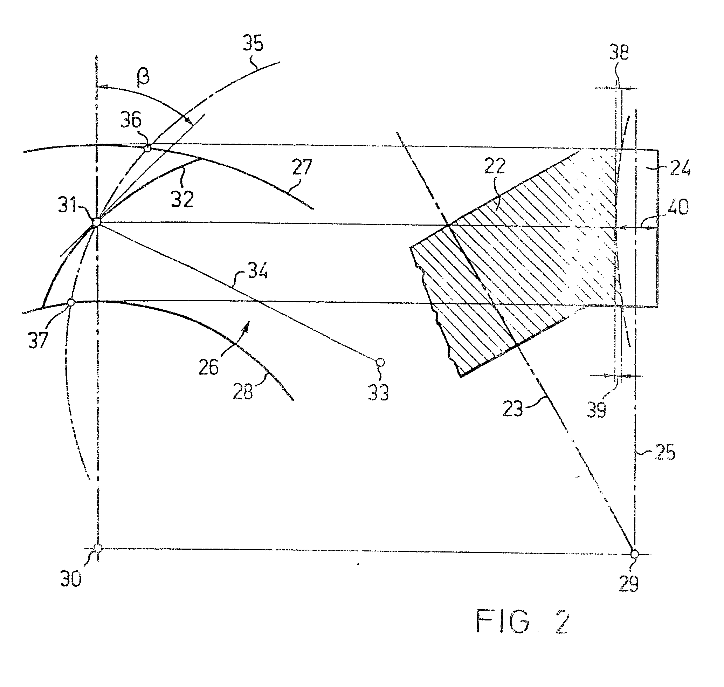

In Fig. 1 erkennt man als Werkstück 1 einen Kegelradrohling, der in nicht näher dargestellter, aber bekannter Art und Weise um eine Werkstückachse 2 drehbar in einer Verzahnungsmaschine 3 gelagert ist. Als weitere an sich bereits bekannte Teile der Verzahnungsmaschine 3 erkennt man einen Wälzstock 4, der in Richtung einer Wälzachse 5 auf einem teilweise erkennbaren Sockel 6 verschiebbar gelagert ist. Eine Wälztrommel 7 ist um die Wälzachse 5 drehbar im Wälzstock 4 gelagert und trägt ihrerseits einen, um eine Messerkopfachse 8 drehbaren Stirnmesserkopf 9. Aus dem Stirnmesserkopf 9 ragen gegen das Werkstück 1 Messer 10 vor, wovon hier nur eines dargestellt ist. Mit 12 ist eine Umfangsfläche des Werkstükkes 1 bezeichnet.

An der Wälztrommel 7 sind Nocken 14, 15, 16, 17, am Wälzstock 4 Schalter 18, 19 vorgesehen. Der Nocken 15 wird hier gerade vom Schalter 19 verdeckt, weshalb er gestrichelt gezeichnet ist. Die Nocken 14 und 16 sind auf einer Bahn 20, die Nocken 15 und 17 auf einer Bahn 21 verschiebbar und einzeln feststellbar.

In Fig. 2 erkennt man als Werkstück ein Kegelrad 22 teilweise dargestellt und geschnitten, mit einer Achse 23, an welchem eine Zahnlücke 24 herausgeschnitten ist. Mit 25 ist eine Mantellinie der Teilfläche des Kegelrades 22 bezeichnet.

Die linke Hälfte der Fig. 2 zeigt eine Aufsicht auf die Teilebene 26 eines Planrades und steht somit senkrecht auf der, in der rechten Hälfte der Fig. 2 dargestellten Seitenansicht. Das Planrad wird durch Bogenstücke 27, 28 begrenzt und kämmt mit dem Kegelrad 24. Die Mantellinie 25 der Teilfläche des Kegelrades 22 erscheint somit auch in der Teilebene 26. Der Schnittpunkt 29 von Achse 23 des Kegelrades 22 und Mantellinie 25 ist somit identisch mit dem Zentrum 30 des Planrades 27, 28. Mit 31 ist ein Berechnungspunkt einer Zahnlängslinie 32 bezeichnet. Die Messerkopfachse 8 des Stirnmesserkopfes 9 gemäß Fig. 1 schneidet dabei die Teilebene 26 des Planrades 27, 28 (Fig. 2) in einem Punkt 33 und die Messer 10 drehen sich auf einem Kreisbogen 35 mit dem Radius 34. Da es sich hier beispielsweise um ein kontinuierliches Schneidverfahren handelt, hat die Zahnlängslinie 32 eine andere Krümmung und ein anderes Zentrum als der Kreisbogen 35.

Durch nicht näher dargestelltes Ermitteln des Höhenunterschiedes zwischen der Teilfläche des Kegelrades 22 und der Teilebene 26 des Planrades 27, 28 an Punkten 36 und 37 ergeben sich die Schnittiefenabweichungen 38, 39 gegenüber der Schnittiefe 40 am Berechnungspunkt 31. Diese Schnittiefenabweichungen 38, 39 sind umso größer, je größer der Spiralwinkel $\beta$ gewählt wird.

Fig. 3 stellt schematisch in einer Ansicht ein Werkstück 1' mit seiner Achse 2' dar. Mit 41 ist die leicht ellipsenförmig erscheinende Bahn bezeichnet, die ein Messer 10' um eine leicht gegen die Zeichnungsebene geneigte Messerkopfachse 8' drehend durchläuft. Dabei schneidet es eine Zahnlücke 42 heraus, welche hier durch die beiden Begrenzungslinien 43, 44 auf der Umfangsfläche 12' dargestellt wird. Die beiden Enden der Zahnlücke 42, bzw. deren nähere Umgebung sind als Endbereiche 59, 60 bezeichnet. Der gewählte Spiralwinkel $\beta'$ sei relativ klein. Als Messer 10' kann selbstverständlich auch eine aus mehreren Messern bestehende Messergruppe verstanden werden.

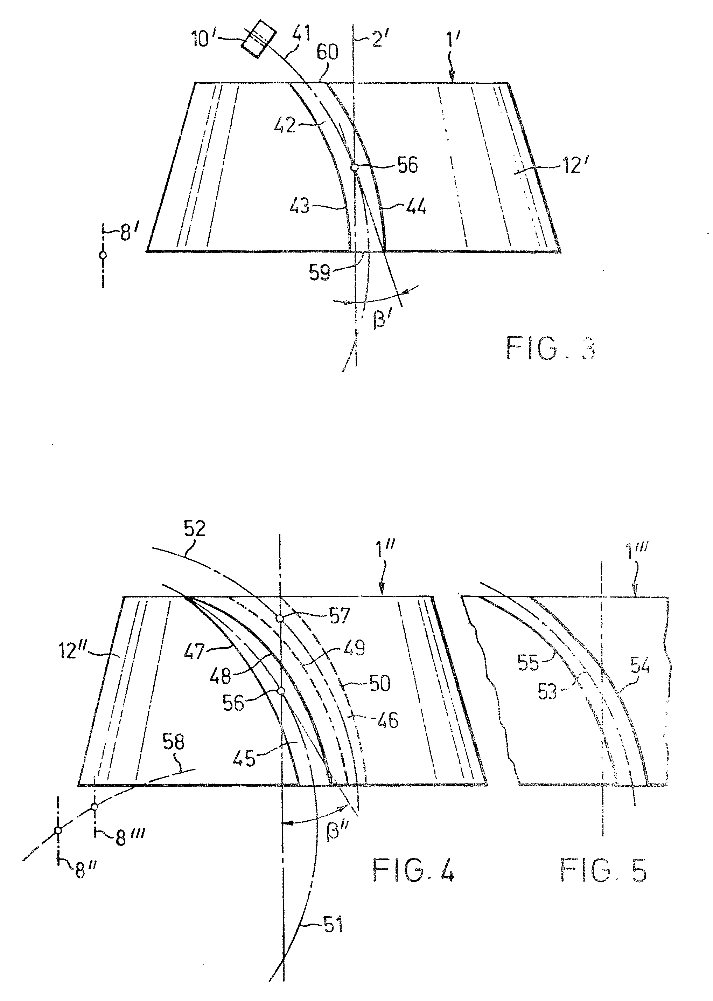

Gemäß Fig. 4 ist analog Fig. 3 am Werkstück 1'' eine Zahnlücke 45 mit einem größeren Spiralwinkel $\beta''$ herausgeschnitten, welche durch Begrenzungslinien 47, 48 an der Umfangsfläche 12'' dargestellt ist. Diese Zahnlücke 45 wurde mit einem um eine Messerkopfachse 8'' drehenden Stirnmesserkopf herausgeschnitten. Eine weitere, gestrichelt gezeichnete, Zahnlücke 46 mit Begrenzungslinien 49, 50 wurde mit dem selben Stirnmesserkopf, aber um die Messerkopfachse 8''' drehend herausgeschnitten.

Fig. 5 zeigt eine Kombination der Zahnlücken 45, 46 aus Fig. 4, wodurch eine Zahnlücke 53 mit Begrenzungslinien 54, 55 entsteht.

### Wirkungsweise

Zum Schneiden einer Zahnlücke in ein Werkstück 1 wird folgendermaßen vorgegangen. Nachdem das Werkstück 1 in an sich bekannter Weise auf die Verzahnungsmaschine 3 aufgespannt wurde, muß zuerst eine Einstechposition bestimmt werden. Dies geschieht, indem beispielsweise der Nocken 15 auf seiner Bahn 21 in einer bestimmten Stellung festgemacht wird. Dies bedeutet, daß bei Beginn des Bearbeitungsvorganges die Wälztrommel 7 gedreht wird bis der Nocken 15 den Schalter 19 betätigt. Dadurch wird die Drehung der Wälztrommel 7 unterbrochen und der Wälzstock 4 beginnt gegen das Werkstück 1 zu fahren. Dabei beginnt sich der Stirnmesserkopf 9 um die Messerkopfachse 8 zu drehen. Je nach Stellung des Nockens 15 und somit der Wälztrommel 7 beginnen die Messer 10 des Stirnmesserkopfes 9 zwischen den Endbereichen 59, 60 einer herzustellenden Zahnlücke 42' an einer bestimmten Einstechposition 56, 57 in Richtung des Pfeiles 61 in das Werkstück 1 einzustechen. Dabei ist die Einstechposition 56 ungefähr in der Mitte zwischen den Endbereichen 59, 60 besonders vorteilhaft (siehe Fig. 3) für kleine Spiralwinkel $\beta'$, da dies Begrenzungslinien 43, 44 ergibt, deren Verlauf auf eine nur geringfügig verminderte Zahnlückentiefe im Bereiche der Zahnlückenenden schließen läßt.

In Fig. 2 sind Schnittiefenabweichungen 38, 39 für einen vergleichbaren Spiralwinkel $\beta$ erkennbar. Daß der Spiralwinkel $\beta$ gemäß Fig. 3 größer erscheint als der Spiralwinkel $\beta'$ in Fig. 3 liegt daran, daß der Spiralwinkel für eine, nach einem kontinuierlichen Verfahren hergestellte Zahnlücke 24 gilt, während der Spiralwinkel $\beta'$ für eine, nach einem Einzelteilverfahren hergestellte Zahnlücke 42 gilt. Der Unterschied besteht darin, daß sich im kontinuierlichen Verfahren das Werkstück während des Schneidens dreht. Deshalb läßt das kontinuierliche Verfahren für gleiche Schnittiefenabweichungen 38, 39 größere Spiralwinkel $\beta$ zu.

Haben nun die Messer 10 des Stirnmesserkopfes 9 in das Werkstück 1 bis auf die gewünschte Zahnlückentiefe eingestochen, so ist die Zahnlücke 24, 42 somit fertig geschruppt und der Rückhub für den Wälzstock 4 wird in an sich bekannter Weise eingeleitet. Bei einem kontinuierlichen Verfahren ist dabei bereits der ganze Umfang des Werkstückes 1 mit Zahnlücken 24 versehen. Beim Einzelteilverfahren muß der Stirnmesserkopf nach beendeter erster Zahnlücke 42 wieder aus dieser herausgefahren und das Werkstück 1 um eine Zahnteilung weitergedreht werden, wobei der Einstechvorgang von neuem beginnt bis auch in diesem Fall das ganze Werkstück 1 mit Zahnlücken 42 versehen ist.

Die so geschruppten Zahnlücken 24, 42 müssen noch geschlichtet werden. Dazu dreht sich die Wälztrommel 7 nach beendetem Rückhub weiter bis die Nocken 16, 17 gleichzeitig die Schalter 18, 19 betätigen. Dann beginnt wieder ein Einstechhub, welcher gerade anschließend von einer Wälzbewegung abgelöst wird, welche zu Ende geht, wenn der Nocken 14 den Schalter 18 betätigt. Anschließend führt der Wälzstock 4 wieder einen Rückhub aus und das Zahnrad ist fertig. Jedenfalls dann, wenn es nach einem kontinuierlichen Verfahren hergestellt wird. Beim Einzelteilverfahren laufen diese Vorgänge sinngemäß mehrmals ab. Durch dieses Wälzen haben die Zahnflanken nun auch ihre endgültige Form erhalten.

Im Falle großer Spiralwinkel $\beta''$ (Fig. 4) oder kleiner Raddurchmesser ergibt ein einmaliges Einstechen in der Einstechposition 56 aber längs der Zahnlücke 45 große Unterschiede in der Zahnlückentiefe. Der Verlauf der Begrenzungslinien 47, 48 legt den Schluß nahe, daß am einen Ende der Zahnlücke 45 die Zahnlückentiefe gleich null ist. Ein Einstechen in Einstechposition 57 hätte dabei eine Zahnlücke 46 mit gleichmäßigerer Zahnlückentiefe ergeben, wie der Verlauf der Begrenzungslinien 49, 50 zeigt. Aber auch hier sich noch größere Zahnlückenbreitenunterschiede und somit größere Zahnlückentiefenunterschiede bemerkbar.

In einem solchen Falle ist es vorteilhaft, sowohl in Einstechposition 56 wie auch in Einstechposition 57 einzustechen, was eine wesentlich gleichmäßigere Zahnlücke 53 (Fig. 5) ergibt, wie der Verlauf der Begrenzungslinien 54, 55 zeigt. Dazu muß ein weiterer Nocken 15' auf der Wälztrommel 7 angeordnet werden, um eine weitere Einstechbewegung auszulösen. Selbstverständlich muß das Werkstück 1'' zwischen den beiden Einstechpositionen 56, 57 gegenüber dem Stirnmesserkopf gedreht werden, damit beim zweimaligen Einstechen eine einzige Zahnlücke 53 entsteht. Der Bogen 58 in Fig. 4 gibt dabei den geometrischen Ort möglicher Stellungen der Messerkopfachse 8'', 8''' an, wobei die Messerkopfachsen 8'', 8''' den Einstechpositionen 56, 57 zugeordnet sind.

Je nach Werkstück — Stirnrad, Kegelrad etc. — und Art der gewünschten Verzahnung ist eine Mehrzahl von Einstechpositionen längs einer Zahnlücke besonders vorteilhaft. Dies ergibt aber keine wesentliche Verlängerung der Bearbeitszeit, da die Einstechvorgänge sehr rasch ablaufen können.

Dieses Verfahren kann, wie bereits angedeutet, sowohl für kontinuierliche Herstellungsverfahren, wie für Einzelteilverfahren angewendet werden. Ebenso ist es für nach dem Erzeugungsplanrad- oder Erzeugungsgegenradverfahren hergestellte Zahnräder anwendbar. Eine Anwendung dieses Verfahrens auf Maschinen mit mehreren Stationen und Messerköpfen fällt ebenfalls unter den Schutzbereich des Patentes.

**Patentansprüche**

1. Verfahren zum Herstellen von Zahnrädern mit gewälzten Zahnflanken durch Herausschneiden von Zahnlücken (24, 42, 45, 46, 53) mit mindestens einem, um eine Messerkopfachse (8) eine Drehbewegung ausführenden, mit Messern (10, 10') versehenen Stirnmesserkopf (9), wobei zum Schruppen der Zahnlücken (24, 42, 45, 46, 53) in einem ersten Schritt Stirnmesserkopf (9) und Werkstück (1) mindestens eine Einstechbewegung gegeneinander ausführen und zum Schlichten der Zahnlücken (24, 42, 45, 46, 53) in einem zweiten Schritt zwischen Stirnmesserkopf (9) und Werkstück (1) mindestens eine Wälzbewegung ausgeführt wird, dadurch gekennzeichnet, daß im ersten Schritt zum Herausschneiden einer Zahnlücke (42', 53) mehrere Einstechbewegungen mit erstmaliger Berührung zwischen Messer (10, 10') und Werkstück (1) an mehreren bestimmbaren Einstechpositionen (56, 57) längs der Zahnlücke (42', 53) ausgeführt werden.

2. Verfahren gemäß Anspruch 1, dadurch gekennzeichnet, daß zum Herstellen eines Zahnrades nach einem Einzelteilverfahren für jede Zahnlücke (42', 53) mehrere Einstechbewegungen auszuführen sind.

3. Verfahren gemäß Anspruch 1, dadurch gekennzeichnet, daß zum Herstellen eines Zahnrades nach einem kontinuierlichen Verfahren für die Gesamtheit aller Zahnlücken des Zahnrades mehrere Einstechbewegungen auszuführen sind.

4. Verfahren gemäß Anspruch 1, dadurch gekennzeichnet, daß die mindestens eine Einstechbewegung (56, 57) zwischen den Endbereichen (59, 60) einer herzustellenden Zahnlücke (42') liegt.

5. Verfahren gemäß Anspruch 1, dadurch gekennzeichnet, daß das Werkstück (1) in einer einzigen Aufspannung geschruppt und geschlichtet wird.

## Claims

1. Process for manufacturing gears having generated tooth flanks by cutting-out tooth gabs (24, 42, 45, 46, 53) with at least one face-mill cutter-head (9) carrying cutters (10, 10′) and rotating about a cutter-headaxis (8), wherein during a first step for the purpose of rough cutting the tooth gabs (24, 42, 46, 46, 53) carrying out a plunge-cut movement between the facemill-cutter-head (9) and a workpiece (1) and during a second step for the purpose of finish cutting the tooth gabs (24, 42, 45, 46, 53) performing a generating movement between the face-mill cutter-head (9) and the workpiece (1), characterised in that said first step cutting-out a tooth gab (42′, 53) encompasses a number of plunge-cut movements during the initial contact between the cutters (10, 10′) and the workpiece (1) at a number of predeterminable plunge-cut positions (56, 57) along the tooth gab (42′, 53).

2. Process as defined in claim 1, characterised in that a gear to be manufactured by individual indexing techniques encompasses a number of plunge-cut movements for each tooth gab (42′, 53).

3. Process as defined in claim 1, characterised in that a gear to be manufactured by continuous fabrication techniques encompasses a number of plunge-cut movements for the entirety of tooth gabs of the gear.

4. Process as defined in claim 1, characterised in that at least one plunge-cut movement (56, 57) is positioned between end regions (59, 60) of a tooth gap (42′) to be fabricated.

5. Process as defined in claim 1, characetrised in that rough cutting and finish cutting the workpiece (1) is performed during a single chucking operation.

## Revendications

1. Procédé pour réaliser des roues dentées avec des flancs de dents en développante, en dégageant par taillage les entre-dents (24, 42, 45, 46, 53) à l'aide d'au moins une tête à outils frontaux (9) munie d'outils (10, 10′) et animée d'un mouvement de rotation autour d'un axe (8) de tête à outils, procédé dans lequel pour le dégrossissage des entre-dents (24, 42, 45, 46, 53) dans une première étape, la tête à outils frontaux (9) et la pièce d'oeuvre (1) effectuent au moins un déplacement de plongée l'une par rapport à l'autre tandis que pour le finissage des entre-dents (24, 42, 45, 46, 53) dans une seconde étape, au moins un déplacement en développante est effectué entre la tête à outils frontaux (9) et la pièce d'oeuvre (1), procédé caractérisé en ce que dans la première étape, pour dégager par taillage un entre-dent (42′, 53) plusieurs déplacements de plongée avec un premier contact entre les outils (10, 10′) et la pièce d'œuvre (1) en plusieurs positions de plongée (56, 57) susceptibles d'être déterminées le long de l'entre-dent (42′, 53) sont effectués.

2. Procédé selon la revendication 1, caractérisé en ce que, pour réaliser une roue dentée selon un procédé de division individuelle, plusieurs déplacements de plongée doivent être réalisés pour chaque entre-dent (42′, 53).

3. Procédé selon la revendication 1, caractérisé en ce que, pour réaliser une roue dentée selon un procédé continu, plusieurs déplacements de plongée doivent être réalisés pour la totalité de tous les entredents de la roue dentée.

4. Procédé selon la revendication 1, caractérisé en ce que le déplacement de plongée à effectuer au moins une fois (56, 57) se situe entre les zones d'extrémités (59, 60) d'un entre-dent (42′) à réaliser.

5. Procédé selon la revendication 1, caractérisé en ce que la pièce d'œuvre (1) est dégrossie et finie dans un bridage unique.

FIG. 1

FIG. 2

FIG. 3

FIG. 4

FIG. 5